# EUROPEAN PATENT SPECIFICATION

(11) **EP 3 936 483 B1**
(45) Date of publication and mention of the grant of the patent: **25.09.2024**
(21) Application number: 21181416.5
(22) Date of filing: 24.06.2021
(51) Int. Cl.: C03B 37/025, C03B 37/027

(54) **METHOD FOR MANUFACTURING OPTICAL FIBER**
VERFAHREN ZUR HERSTELLUNG EINER OPTISCHEN FASER
PROCÉDÉ DE FABRICATION DE FIBRE OPTIQUE

(30) Priority: 07.07.2020 JP 2020117240
(43) Date of publication of application: 12.01.2022
(73) Proprietor: SUMITOMO ELECTRIC INDUSTRIES, LTD., Osaka-shi, Osaka 541-0041 (JP)
(72) Inventor: Kawaguchi, Yuki, Osaka-shi, Osaka, 541-0041 (JP); Sakuma, Hirotaka, Osaka-shi, Osaka, 541-0041 (JP)
(74) Representative: Hoffmann Eitle

(56) References cited:
- JP-A- 2003 327 445
- JP-A- 2010 120 811
- JP-B2- 6 515 483

## Description

### CROSS-REFERENCE

The present application is based upon and claims the benefit of the priority from Japanese patent application No. 2020-117240, filed on July 7, 2020.

### TECHNICAL FIELD

The present disclosure relates to a method for manufacturing an optical fiber.

### BACKGROUND

As one of the factors that deteriorate the variation of the glass outer diameter of the optical fiber, the vibration of the drawing tower is known. Japanese Unexamined Patent Application Publication No. 2016 79073 discloses a method for suppressing the variation of the outer diameter of the optical fiber glass due to the vibration of the drawing tower by providing a vibration suppressing mechanism having a time constant of 1 seconds or less between the drawing tower and the optical fiber preform.

### SUMMARY

The present disclosure provides a method for manufacturing an optical fiber. The method includes the features of claim 1.

### BRIEF DESCRIPTION OF THE DRAWINGS

The foregoing and other purposes, aspects and advantages will be better understood from the following detailed description of a preferred embodiment of the invention with reference to the drawings, in which:
FIG. 1 is a configuration diagram of a manufacturing device used in the method for manufacturing an optical fiber according to an embodiment.
FIG 2 is a diagram of a swing guide roller from the upstream side of the pass line.
FIG. 3 is a flowchart showing a method for manufacturing an optical fiber according to the embodiment.
FIG. 4 is a flowchart showing a step of controlling a swing of the swing guide roller.
FIG. 5 is a graph showing a temporal change in a glass outer diameter variation when the glass outer diameter variation deteriorates.
FIG. 6 is a graph showing a frequency spectrum of a glass outer diameter variation when the glass outer diameter variation deteriorates.
FIG. 7 is a graph showing a frequency spectrum of a glass outer diameter variation when feedback control is performed by the controller.
FIG. 8 is a graph showing a temporal change in a glass outer diameter variation when feedback control is performed by the controller.

### DETAILED DESCRIPTION

### [Problem to be Solved by the Present Disclosure]

One of the important characteristics of an optical fiber is polarization mode dispersion (PMD). Japanese Unexamined Patent Application Publication No. 1996-295528 discloses a method for suppressing PMD by periodically swinging a guide roller and twisting an optical fiber. However, in the method disclosed in Japanese Unexamined Patent Application Publication No. 1996-295528, the outer diameter of the glass is varied by changing the traveling position and distance of the optical fiber. In addition, a variation in the outer diameter of the glass may specifically deteriorate under certain conditions. In such a case, in order to suppress the variation of the outer diameter of the glass, a method for remarkably reducing the drawing speed or reducing the twisting as much as possible is adopted. However, productivity and yield are severely compromised. According to the method described in Japanese Unexamined Patent Application Publication No. 2016-79073, the variation of the glass outer diameter is improved to some extent, but it is not enough. JP 2003 327445A discloses a method of accurately measuring the diameter of an optical fiber with reduced polarization mode dispersion.

An object of the present disclosure is to provide a method for manufacturing an optical fiber capable of further suppressing a variation in the outer diameter of glass without deteriorating productivity and yield.

### [Effects of the Present Disclosure]

According to the present disclosure, it is possible to provide a method for manufacturing an optical fiber capable of further suppressing a variation in the outer diameter of glass without deteriorating productivity and yield.

[Description of Embodiments of the Present Disclosure] Embodiments of the present disclosure will be described. A method for manufacturing an optical fiber according to an embodiment of the present disclosure includes: heating an optical fiber preform to draw glass fiber; measuring an outer diameter of the glass fiber to obtain a function of time; transforming the function of time into a function of frequency; identifying a first peak caused by a first drawing condition and a second peak caused by a second drawing condition in the function of frequency; and adjusting the second drawing condition so as to satisfy fn < fm - wm / 2 or fn > fm + wm / 2, where fm is a frequency of the first peak, wm is a full width at half maximum of the first peak, and fn is a frequency of the second peak.

In this method for manufacturing an optical fiber, the second drawing condition is adjusted so that the first peak caused by the first drawing condition and the second peak caused by the second drawing condition do not overlap each other. As a result, the occurrence of a large amplitude due to the overlap of the first peak and the second peak is suppressed. Therefore, it is possible to further suppress the deterioration of the variation of the glass outer diameter without deteriorating the productivity and the yield.

A sampling time interval of the outer diameter may be 100 ms or less. In this case, it is possible to surely detect the short-period variation of the glass outer diameter.

The method for manufacturing an optical fiber further includes forming a coating layer on the glass fiber to form an optical fiber; and twisting the optical fiber using a swing guide roller. In this case, since it is necessary to swing the swing guide roller in order to twist the optical fiber, the swing frequency of the swing guide roller is the second drawing condition, and a second peak is generated by the swing frequency. Therefore, it is more effective to prevent the first peak and the second peak from overlapping each other.

The second drawing condition is a swing frequency of the swing guide roller. In this case, by adjusting the swing frequency of the swing guide roller, it is possible to further suppress the deterioration of the variation of the glass outer diameter without deteriorating the productivity and the yield.

### [Details of Embodiments of the Present Disclosure]

A specific example of the method for manufacturing an optical fiber according to the present disclosure will be described below with reference to the drawings. The present invention is not limited by such examples but shown by the claims.

In the following description, the same elements in a description of the drawings are denoted by the same reference signs and an overlapping description will be omitted.

### (Optical fiber manufacturing device)

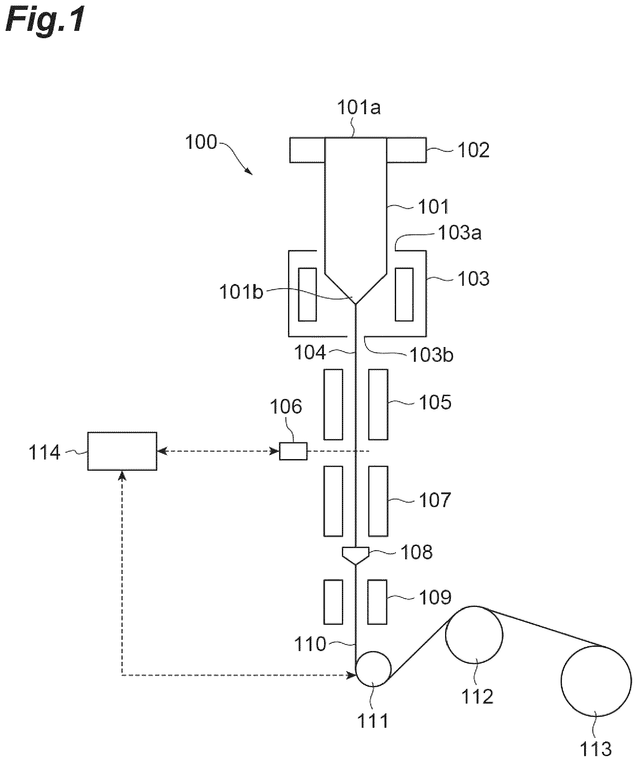

FIG. 1 is a configuration diagram of a manufacturing device used in the method for manufacturing an optical fiber according to the embodiment. The manufacturing device 100 (drawing device) shown in FIG. 1 is a device for manufacturing the optical fiber 110 from the optical fiber preform 101 via the glass fiber 104. A manufacturing device 100 is provided with a gripper 102, a heating furnace 103, a thermal insulation furnace 105, a measuring instrument 106, a cooler 107, a die 108, an ultraviolet irradiation device 109, a swing guide roller 111, a capstan 112, a winder 113, and a controller 114.

The gripper 102 grips the optical fiber preform 101 and feeds it into the heating furnace 103 at a constant speed. The optical fiber preform 101 includes a base end portion 101a gripped by the gripper 102 and a tip portion 101b inserted into the heating furnace 103. The gripper 102 functions as a supplier for supplying the optical fiber preform 101 to the heating furnace 103.

The heating furnace 103 includes openings 103a and 103b. The optical fiber preform 101 is inserted into the opening 103a. The opening 103b faces the opening 103a. The glass fiber 104 is drawn out from the opening 103b. The heating furnace 103 heats and softens the tip portion 101b of the optical fiber preform 101 supplied into the heating furnace 103. The glass fiber 104 is drawn out from the tip portion 101b softened by heating. The glass fiber 104 is drawn out of the heating furnace 103 through the opening 103b.

The thermal insulation furnace 105 keeps the glass fiber 104 warm and relaxes the structure of the glass. The measuring instrument 106 measures the outer diameter (glass outer diameter) of the glass fiber 104 in a state where the glass structure is relaxed. The measuring instrument 106 measures the outer diameter of the glass by irradiating the glass fiber 104 with a laser. The sampling time interval of the outer diameter of the glass by the measuring instrument 106 is, for example, 100 ms or less. Depending on the drawing speed, there is a possibility that the variation of the short period of the glass outer diameter cannot be detected when the sampling interval becomes long. The measuring instrument 106 transmits the measured outer diameter of the glass to the controller 114.

A cooler 107 is located after the measuring instrument 106 to cool the glass fiber 104. The die 108 applies resin to the outer peripheral surface of the glass fiber 104 to form a coating resin. The resin includes an acrylate-based ultraviolet curable resin. The ultraviolet irradiation device 109 irradiates the coating resin formed on the glass fiber 104 with ultraviolet rays to cure the coating resin. As a result, the glass fiber is coated with the resin to form the optical fiber 110.

The swing guide roller 111 periodically tilts its axial direction to twist the optical fiber 110. The swing guide roller 111 is electrically connected to the controller 114, and is controlled and oscillated by the controller 114 to impart a twist to the optical fiber 110. Although a pair of fixed guide rollers may be disposed in front of and behind the swing guide roller 111, it is not possible to completely prevent the swing of the swing guide roller 111 from being transmitted to other portions.

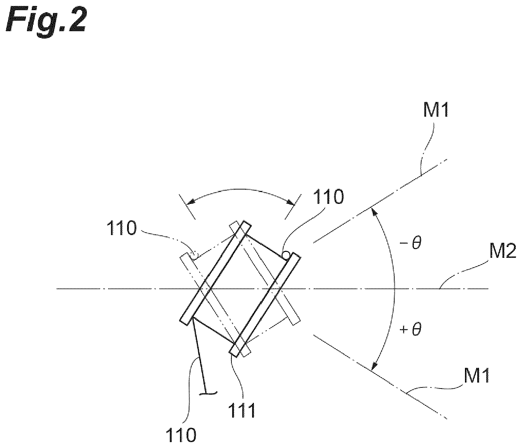

FIG. 2 is a diagram of the swing guide roller as viewed from the upstream side of the pass line (the ultraviolet irradiation device side). As shown in FIG. 2, the swing guide roller 111 swings within the range of ± θ in the angle formed by the rotation axis M1 and the predetermined axis M2. As a result of the swing motion as the swing, when the rotational axis M1 of the swing guide roller 111 is inclined by an angle + Θ with respect to the predetermined axis M2, a lateral force is applied to the optical fiber 110, and the optical fiber 110 rolls on the surface of the swing guide roller 111 to twist the optical fiber 110. When the swing guide roller 111 is inclined by an angle - θ with respect to a predetermined axis M2, the optical fiber 110 is twisted in the opposite direction.

That is, the optical fiber 110 is alternately twisted clockwise and counterclockwise with respect to the traveling direction (drawing direction) by repeating a symmetrical reciprocating motion in which the swing guide roller 111 swings at an angle ± θ with respect to a predetermined axis M2. The swing guide roller 111 guides the optical fiber 110 to the capstan 112 while twisting the optical fiber 110.

The capstan 112 pulls the optical fiber 110 at a predetermined speed and tension. The winder 113 winds the optical fiber 110 drawn by the capstan 112. The controller 114 receives the glass outer diameter measured by the measuring instrument 106 from the measuring instrument 106, and feedback-controls the swing of the swing guide roller 111 based on the glass outer diameter. The controller 114 may control the entire manufacturing device 100.

The controller 114 may be configured as a computer system including, for example, a processor such as a CPU (Central Processing Unit), memories such as a RAM (Random Access Memory) and a ROM (Read Only Memory), input / output devices such as a touch panel, a mouse, a keyboard and a display, and a communication device such as a network card. The controller 114 realizes the functions of the controller 114 by operating each hardware under the control of the processor based on the computer program stored in the memory.

### (Method for manufacturing optical fiber)

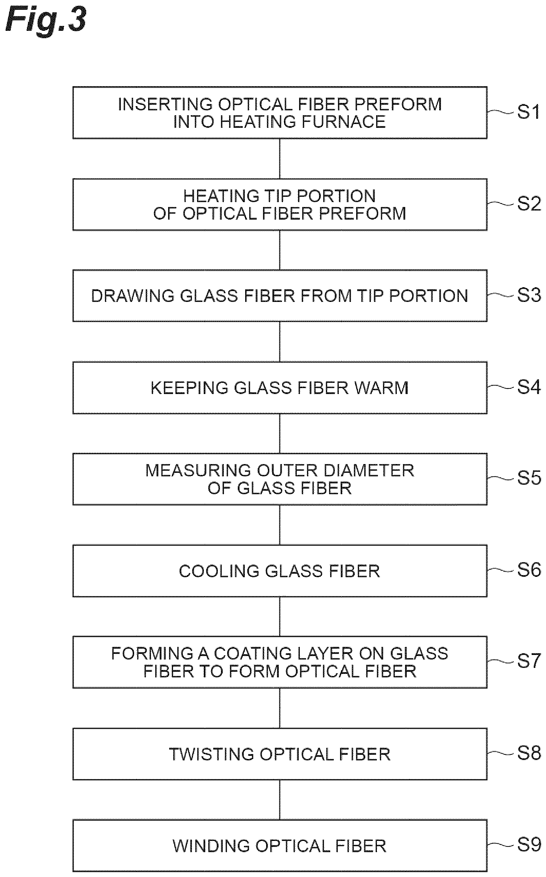

FIG. 3 is a flowchart showing a method for manufacturing an optical fiber according to the embodiment. The method for manufacturing the optical fiber 110 includes: step S1 of inserting the optical fiber preform 101 into the heating furnace (wire drawing furnace) 103; step S2 of heating the tip portion 101b of the optical fiber preform 101; step S3 of drawing the glass fiber 104 from the tip portion 101b; step S4 of keeping the glass fiber 104 warm; step S5 of measuring the outer diameter of the glass fiber 104; step S6 of cooling the glass fiber 104; step S7 of forming a coating layer on the glass fiber 104 to form the optical fiber 110; step S8 of twisting the optical fiber 110; and step S9 of winding the optical fiber 110. The steps after step S4 are shown in the order when focusing on a certain point in the length direction of the optical fiber 110.

In step S1, the optical fiber preform 101 is inserted into the heating furnace 103 at a constant speed by the gripper 102. In the optical fiber preform 101, the tip portion 101b is fed into the heating furnace 103 through the opening 103a of the heating furnace 103 with the base end portion 101a gripped. In step S2, the tip portion 101b is heated by the heating furnace 103 to be softened.

In step S3, the glass fiber 104 is drawn out through the opening 103b from the tip portion 101b softened by heating. The insertion speed of the optical fiber preform 101 in step S1 can be set according to the drawing speed of the glass fiber 104 in step S3.

In step S4, the drawn out glass fiber 104 is kept warm by the thermal insulation furnace 105. This relaxes the structure of the glass. In step S5, the outer diameter of the glass fiber 104 is measured by the measuring instrument 106. In step S6, the glass fiber 104 is cooled.

In step S7, first, the outer peripheral surface of the glass fiber 104 is coated with resin by the die 108 to form a coating resin. Subsequently, the coating resin is cured by ultraviolet rays irradiated from the ultraviolet irradiation device 109 to form a coating layer surrounding the glass fiber 104. As a result, a coating layer on the outer peripheral surface of the glass fiber 104 is formed. Accordingly, the optical fiber 110 is obtained. A plurality of coating layers may be formed by repeating step S7.

In step S8, the optical fiber 110 is twisted by the periodic swing of the swing guide roller 111. In step S9, the optical fiber 110 is drawn at a predetermined speed and tension by the capstan 112 and then wound by the winder 113.

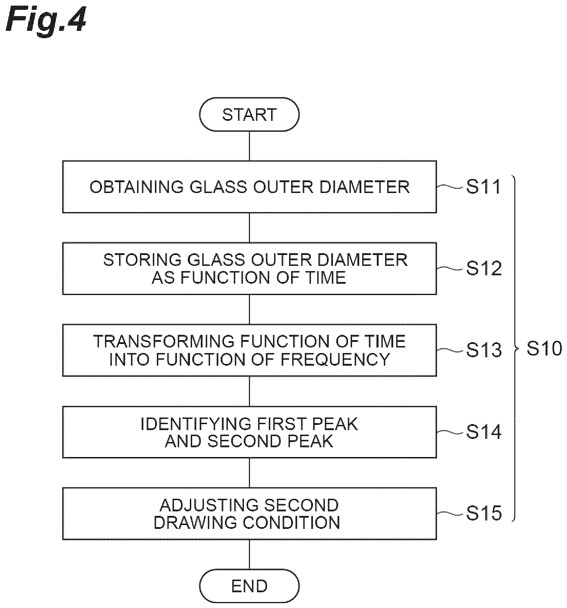

FIG. 4 is a flowchart showing a step of controlling a swing of the swing guide roller. The method for manufacturing the optical fiber 110 further includes step S10 as shown in FIG. 4. Step S10 is a step of controlling the swing of the swing guide roller 111 based on the outer diameter of the glass measured in step S5. Step S10 is performed by the controller 114. First, the controller 114 performs step S11 for obtaining the glass outer diameter. Specifically, the controller 114 receives the glass outer diameter measured in step S5 from the measuring instrument 106.

Subsequently, the controller 114 performs step S12 of storing the obtained outer diameter of the glass as a function of time. For example, the controller 114 stores the outer diameter and the time in the memory in association with each other. Subsequently, the controller 114 performs step S13 for transforming the stored function into a function of frequency. This transform is performed by a Fourier transform.

Subsequently, the controller 114 performs step S14 of identifying the first peak P1 caused by the first drawing condition and the second peak P2 caused by the second drawing condition in the transformed function of frequency. The first drawing condition is, for example, the frequency caused by a vibration of the manufacturing device 100, the building, or the optical fiber preform 101. In the present invention the first drawing condition is the characteristic vibration frequency of the manufacturing device 100. The second drawing condition is a frequency caused by a disturbance, that is a swing frequency of the swing guide roller 111.

The first peak P1 has a relatively large bandwidth. The second peak P2 has a narrower bandwidth than the first peak P1.

Since the second peak P2 is a peak corresponding to the swing frequency or the half multiple swing frequency of the swing guide roller 111, the controller 114 can identify the second peak P2 based on the swing frequency of the swing guide roller 111. When the second peak P2 is identified, the controller 114 can identify the first peak P1 by comparing the bandwidth of the second peak P2 with a bandwidth of a peak to be identified. The full width at half maximum may be used for the comparison instead of the bandwidth.

Next, the controller 114 performs step S15 of adjusting the second drawing condition so as to satisfy fn < fm - wm / 2 or fn > fm + wm / 2, where fm is the frequency of the first peak P1, wm is the full width at half maximum of the first peak P1, and fn is the frequency of the second peak P2. Since the second peak P2 corresponds to the swing frequency or the half multiple swing frequency of the swing guide roller 111, there is a plurality of second peaks P2. Therefore, the second drawing condition is adjusted so as to satisfy the above relation for the frequency fn of each of the plurality of the second peaks P2.

In this embodiment, the controller 114 adjusts the swing frequency of the swing guide roller 111 as the second drawing condition. Thus, the second peak P2 can be shifted from the first peak P1 so that the second peak P2 does not overlap the first peak P1. As a result, it is suppressed that the first peak P1 and the second peak P2 are overlapped each other, and that the amplitude of the glass outer diameter variation increases. The second peak P2 overlapping the first peak P1 means that the frequency fn of the second peak P2 is within a frequency range centered on the frequency fm of the first peak P1 and having the same width as the full width at half maximum wm.

As described above, the controller 114 performs step S10 to control the swing of the swing guide roller 111. The characteristic vibration frequency of the manufacturing device 100 also varies with the remaining length of the optical fiber preform 101. Therefore, even if the second peak P2 is once shifted from the first peak P1 by step S10, the first peak P1 may change to overlap the second peak P2 again. Therefore, it is effective to monitor the outer diameter of the glass at all times during the manufacturing the optical fiber 110, to repeatedly perform step S10, and to perform the feedback control of the second drawing condition. Step S10 may be performed, for example, every time step S5 is performed a predetermined number of times, or may be performed every predetermined time.

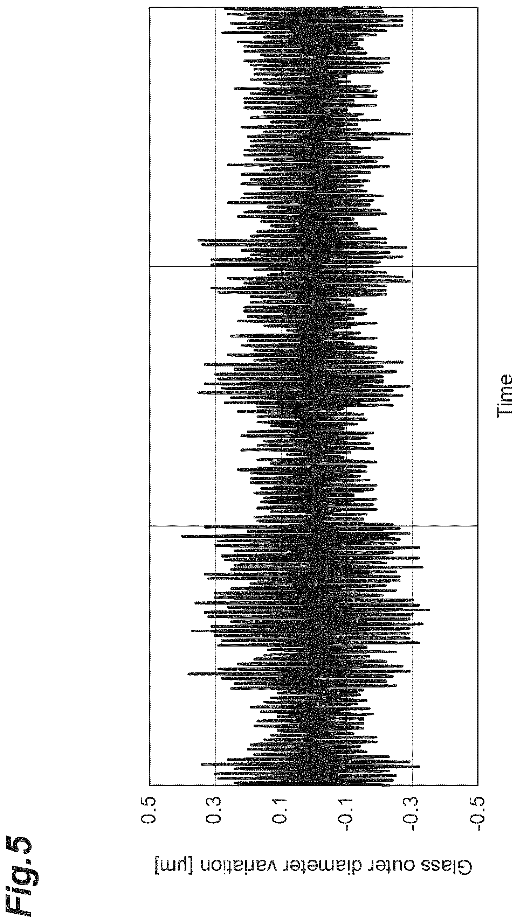

FIG. 5 is a graph showing a temporal change in a glass outer diameter variation when the glass outer diameter variation deteriorated. In FIG. 5, the horizontal axis represents time, and the vertical axis represents the glass outer diameter variation (µm). The glass outer diameter variation is the difference from the target glass outer diameter. In a general optical fiber, the target glass outer diameter is set to 125 µm. In the graph of FIG. 5, 3σ of the glass outer diameter variation was 0.41 µm.

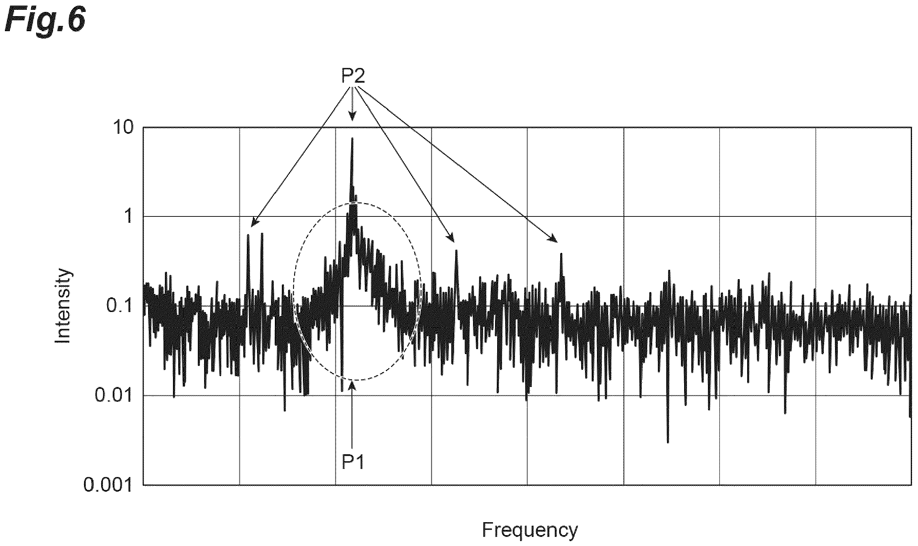

FIG. 6 is a graph showing a frequency spectrum of a glass outer diameter variation when the glass outer diameter variation deteriorated. FIG. 6 shows the result of Fourier transform of the time variation of the glass outer diameter variation shown in FIG. 5. In FIG. 6, the horizontal axis represents frequency and the vertical axis represents intensity. In the frequency spectrum shown in FIG. 6, there are a first peak P1 having a relatively wide bandwidth and a second peak P2 having a relatively narrow bandwidth. As described above, the first peak P1 is caused by the characteristic vibration frequency of the manufacturing device 100. The second peak P2 corresponds to the frequency of the swing guide roller 111, which imparts a twist, or a half multiple thereof. Here, the first peak P1 overlaps one of the second peak P2. When the first peak P1 and the second peak P2 overlap with each other in this way, the amplitude of the glass outer diameter variation increases.

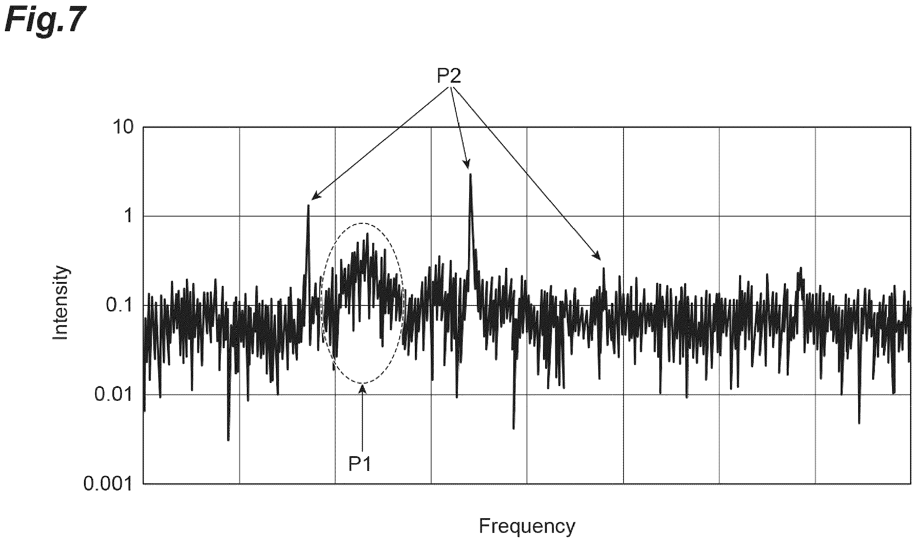

Feedback control was performed by the controller 114. FIG. 7 is a graph showing a frequency spectrum of a glass outer diameter variation when feedback control was performed by the controller. In FIG. 7, the horizontal axis represents frequency and the vertical axis represents intensity. Specifically, the frequency of the second peak P2 was adjusted so that the frequency of the second peak P2 was shifted from the frequency of the first peak P1. When the swing frequency of the swing guide roller 111 becomes low, the frequency interval between the adjacent second peaks P2 becomes narrow, and then the second peak P2 easily overlaps the first peak P1. Therefore, in this embodiment, the swing frequency of the swing guide roller 111 was adjusted so as to increase.

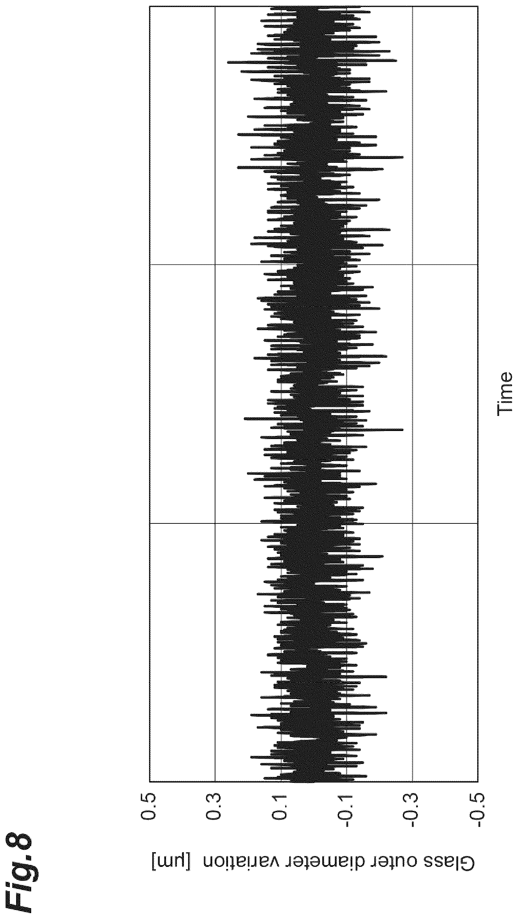

FIG. 8 is a graph showing a temporal change in a glass outer diameter variation when feedback control was performed by the controller. In FIG. 8, the horizontal axis represents time, and the vertical axis represents the glass outer diameter variation (µm). In the graph of FIG. 8, 3σ of the glass outer diameter variation was improved to 0.22 µm. The drawing speed was not changed. Therefore, the productivity is maintained and the variation in the outer diameter of the glass is improved.

As described above, in the manufacturing method according to the embodiment, in step S10, the second drawing condition is adjusted so that the first peak P1 caused by the first drawing condition and the second peak P2 caused by the second drawing condition do not overlap each other. As a result, the occurrence of a large amplitude due to the overlap of the first peak P1 and the second peak P2 is suppressed. Therefore, it is possible to further suppress the deterioration of the variation of the glass outer diameter without deteriorating the productivity and the yield.

The sampling time interval of the glass outer diameter by the measuring instrument 106 is 100 ms or less. Therefore, it is possible to surely detect the short-period variation of the glass outer diameter.

The above-mentioned manufacturing method includes step S8 of forming a coating layer on the glass fiber 104 to form the optical fiber 110, and twisting the optical fiber 110 using the swing guide roller 111. Accordingly, since it is necessary to swing the swing guide roller 111 in order to twist the optical fiber 110, the swing frequency of the swing guide roller 111 becomes the second drawing condition. Therefore, the second peak P2 is generated by the swing frequency. Therefore, step S10 which prevent the first peak P1 and the second peak P2 from overlapping each other is more effective.

## Claims

1. A method for manufacturing an optical fiber (110) comprising:
heating an optical fiber preform (101) to draw glass fiber (104);
measuring an outer diameter of the glass fiber (104) to obtain a function of time;
transforming the function of time into a function of frequency;
identifying a first peak (P1) caused by a first drawing condition and a second peak (P2) caused by a second drawing condition in the function of frequency;
adjusting the second drawing condition so as to satisfy fn < fm - wm / 2 or fn > fm + wm / 2, where fm is a frequency of the first peak (P1), wm is a full width at half maximum of the first peak (P1), and fn is a frequency of the second peak (P2);
forming a coating layer on the glass fiber (104) to form an optical fiber (110); and
twisting the optical fiber (110) using a swing guide roller (111);
wherein the second drawing condition is a swing frequency of the swing guide roller (111);
wherein the first drawing condition is a characteristic vibration frequency of a manufacturing device (100).

2. The method for manufacturing an optical fiber (110) according to claim 1,
wherein a sampling time interval of the outer diameter is 100 ms or less.

3. The method for manufacturing an optical fiber according to claim 1 or 2,
wherein the second peak (P2) includes a plurality of second peaks corresponding to a swing frequency or a half multiple swing frequency of the swing guide roller (111), and
the second drawing condition is adjusted so as to satisfy fn < fm - wm / 2 or fn > fm+ wm / 2 for the frequency fn of each of the plurality of second peaks.

4. The method for manufacturing an optical fiber according to claim 1,
a bandwidth of the first peak (P1) is wider than a bandwidth of the second peak (P2).

## Patentansprüche

1. Verfahren zur Herstellung einer optischen Faser (110), umfassend:
Erhitzen einer Vorform (101) für optische Fasern, um Glasfasern (104) zu ziehen;
Messen eines Außendurchmessers der Glasfaser (104), um eine Zeitfunktion zu erhalten;
Umwandeln der Zeitfunktion in eine Frequenzfunktion;
Identifizieren eines ersten Spitzenwerts (P1), der durch eine erste Ziehungsbedingung verursacht wird, und eines zweiten Spitzenwerts (P2), der durch eine zweite Ziehungsbedingung verursacht wird, in der Frequenzfunktion;
Einstellen der zweiten Ziehungsbedingung, sodass fn < fm - wm / 2 oder fn > fm + wm / 2 erfüllt ist, wobei fm eine Frequenz des ersten Spitzenwerts (P1) ist, wm eine Halbwertsbreite des ersten Spitzenwerts (P1) ist und fn eine Frequenz des zweiten Spitzenwerts (P2) ist;
Bilden einer Überzugsschicht auf der Glasfaser (104), um eine optische Faser (110) zu bilden; und
Verdrehen der optischen Faser (110) mithilfe einer Schwenkführungsrolle (111);
wobei die zweite Ziehungsbedingung eine Schwenkfrequenz der Schwenkführungsrolle (111) ist;
wobei die erste Ziehungsbedingung eine charakteristische Vibrationsfrequenz einer Herstellungsvorrichtung (100) ist.

2. Verfahren zur Herstellung einer optischen Faser (110) nach Anspruch 1,
wobei ein Abtastzeitintervall des Außendurchmessers 100 ms oder weniger beträgt.

3. Verfahren zur Herstellung einer optischen Faser nach Anspruch 1 oder 2,
wobei der zweite Spitzenwert (P2) eine Vielzahl von zweiten Spitzenwerten einschließt, die einer Schwenkfrequenz oder einer halben mehrfachen Schwenkfrequenz der Schwenkführungsrolle (111) entsprechen, und
wobei die zweite Ziehungsbedingung angepasst wird, sodass fn < fm - wm / 2 oder fn > fm + wm / 2 für die Frequenz fn jeder der Vielzahl von zweiten Spitzenwerten erfüllt wird.

4. Verfahren zur Herstellung einer optischen Faser nach Anspruch 1,
wobei eine Bandbreite des ersten Spitzenwerts (P1) größer ist als eine Bandbreite des zweiten Spitzenwerts (P2).

## Revendications

1. Procédé de fabrication d'une fibre optique (110), comprenant :
le chauffage d'une préforme de fibre optique (101) pour étirer une fibre de verre (104) ;
la mesure d'un diamètre extérieur de la fibre de verre (104) pour obtenir une fonction de temps ;
une transformation de la fonction de temps en une fonction de fréquence ;
l'identification d'un premier pic (P1) provoqué par une première condition d'étirage et d'un deuxième pic (P2) provoqué par une deuxième condition d'étirage dans la fonction de fréquence ;
l'ajustement de la deuxième condition d'étirage de manière à satisfaire à fn < fm - wm / 2 ou à fn > fm + wm / 2, où fm est une fréquence du premier pic (P1), wm est une largeur totale à mi-hauteur du premier pic (P1), et fn est une fréquence du deuxième pic (P2) ;
la formation d'une couche de revêtement sur la fibre de verre (104) pour former une fibre optique (110) ; et
la torsion de la fibre optique (110) en utilisant un galet guide oscillant (111) ;
dans lequel la deuxième condition d'étirage est une fréquence d'oscillation du galet guide oscillant (111) ;
dans lequel la première condition d'étirage est une fréquence de vibration caractéristique d'un dispositif de fabrication (100).

2. Procédé de fabrication d'une fibre optique (110) selon la revendication 1,
dans lequel un intervalle de temps d'échantillonnage du diamètre extérieur est de 100 ms ou moins.

3. Procédé de fabrication d'une fibre optique selon la revendication 1 ou la revendication 2,
dans lequel le deuxième pic (P2) inclut une pluralité de deuxièmes pics correspondant à une fréquence d'oscillation ou une demie fréquence d'oscillation multiple du galet guide oscillant (111), et
la deuxième condition d'étirage est ajustée de manière à satisfaire à fn < fm - wm / 2 ou à fn > fm + wm / 2 pour la fréquence fn de chacun de la pluralité de deuxièmes pics.

4. Procédé de fabrication d'une fibre optique selon la revendication 1,
une bande passante du premier pic (P1) étant plus large qu'une bande passante du deuxième pic (P2).
